# EUROPÄISCHE PATENTSCHRIFT

(11) **EP 0 882 642 B1**
(45) Veröffentlichungstag und Bekanntmachung des Hinweises auf die Patenterteilung: **26.06.2002**
(21) Anmeldenummer: 98106958.6
(22) Anmeldetag: 16.04.1998
(51) Int. Cl.: B62D 35/00

(54) **Kraftfahrzeug mit einer heckseitigen Luftleitvorrichtung**
Motor vehicle with an air guide device at the back
Véhicule automobile avec un dispositif de guidage de l'air sur l'arrière

(30) Priorität: 05.06.1997 DE 19723518; 19.09.1997 DE 19741321
(43) Veröffentlichungstag der Anmeldung: 09.12.1998
(73) Patentinhaber: Dr.Ing.h.c. F. Porsche Aktiengesellschaft, 70435 Stuttgart (DE)
(72) Erfinder: Schädlich, Günter, 71263 Weil der Stadt (DE); Erdelitsch, Georg, 74321 Bietigheim-Bissingen (DE); Häcker, Walter, 71732 Tamm (DE)

(56) Entgegenhaltungen:
- EP-A- 0 242 681
- DE-A- 2 851 639

## Beschreibung

Die Erfindung bezieht sich auf ein Kraftfahrzeug mit einer heckseitigen Luftleitvorrichtung, die sich aus einem an einer heckseitigen Haube vorgesehenen Heckspoiler und einem mit diesem verbundenen Heckflügel zusammensetzt.

Aus dem DE-GM 88 01 032 geht eine Luftleitvorrichtung der eingangs genannten Gattung hervor, wobei der Heckflügel, der Heckspoiler und die Haube zu einer vorgefertigten Baueinheit zusammengefasst sind. Der obenliegende, feststehende Heckflügel ist unter Bildung eines schmalen Strömungskanals an den darunterliegenden Heckspoiler angeschlossen.

Dieser Anordnung haftet der Nachteil an, dass der Heckflügel auch bei niedrigen Fahrgeschwindigkeiten, bei denen er nicht zur Erzeugung von Abtrieb an der Hinterachse benötigt wird, seine Betriebsstellung einnimmt.

Ferner besteht die Gefahr, dass die Luftleitvorrichtung mit dem relativ weit nach oben hin vorstehenden Heckflügel beim Durchfahren einer automatischen Waschanlage durch die Waschbürsten beschädigt wird.

Aus der gattungsgemässen EP 0 242 681 A2 ist eine Vorrichtung zum Leiten der Windströmung an Fahrzeugen bekannt geworden, bei der ein Luftleitprofil mittels eines kreisbogenförmigen Ausstellers bewegbar ist. Das Luftleitprofil ist dabei in seiner Ruhestellung von einem muldenförmigen Aufnahme aufgenommen, die an einer Oberseite einer Haube des Kraftfahrzeuges vorgesehen ist. In seiner ausgefahrenen Betriebsstellung steht das Luftleitprofil als Ganzes in einem Abstand zur Fahrzeugkarosserie.

Aufgabe der Erfindung ist es, eine heckseitige Luftleitvorrichtung mit einem Heckspoiler und einem Heckflügel so weiterzubilden, dass der Heckflügel nur bei Bedarf zur Erzielung des erforderlichen Abtriebs herangezogen wird und dass beim Durchfahren einer automatischen Waschanlage keine Beschädigungen der Luftleitvorrichtung auftreten.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, dass durch die bewegliche Ausbildung des Heckflügels dieser bei relativ geringen Fahrgeschwindigkeiten eine eingefahrene Ruhestellung einnimmt, in der er nicht als Heckflügel erkennbar ist. Erst bei höheren Fahrgeschwindigkeiten, bei denen ein hoher Abtrieb an der Hinterachse benötigt wird, wird der Heckflügel durch eine motorische Antriebseinrichtung in seine ausgefahrene Betriebsstellung bewegt.

In der eingefahrenen Ruhestellung des Heckflügels bildet die Oberseite des Heckflügels die Anströmfläche der Hecküberströmung. Bei eingefahrenem Heckflügel wird die Gefahr reduziert, dass beim Durchfahren einer automatischen Waschanlage die Bürsten der Waschanlage an der Luftleitvorrichtung eingeklemmt werden und die Luftleitvorrichtung beschädigt wird.

Die Antriebseinrichtung umfasst vorzugsweise einen zentralen Antriebsmotor, zwei flexible Antriebswellen und zwei den Heckflügel tragende Teleskopaussteller. Jeder Teleskopaussteller besteht zumindest aus einem am Heckspoiler in Lage gehaltenen Außenrohr und einem mit dem Heckflügel verbundenen Innenrohr, wobei das Innenrohr über einen Spindeltrieb mit dem Außenrohr in Wirkverbindung steht.

Gemäß einer ersten Ausführungsform des Teleskopausstellers ist das Außenrohr feststehend angeordnet und das mit dem Heckflügel verbundene Innenrohr führt eine lineare Verschiebebewegung aus. Die Antriebseinrichtung greift hier am unteren Rand des Außenrohres an. Die beiden Endstellungen des Innenrohres werden durch Microschalter mit Endlagenerkennung gesteuert.

Bei einer zweiten Ausführungsform des Teleskopausstellers ist eine Rotationsbewegung des Außenrohres vorgesehen. Die Antriebseinrichtung greift hier im Bereich eines oberen Halteteiles an, wobei die Antriebswelle über eine Schneckenwelle ein Schneckenrad des Außenrohres antreibt. Diese Variante des Teleskopausstellers beansprucht einen geringeren Raumbedarf in Höhenrichtung.

Durch das Schneckengetriebe erfolgt eine bessere Momentenwandlung und das Moment wird dort erzeugt, wo es benötigt wird. Die Antriebswellen können hier einfacher ausgeführt werden und können im Querschnitt dünner sein. Durch die Drehbewegung des Außenrohres und die lineare Verschiebebewegung des Innenrohres wird der sogenannte Slip-Stick-Effekt zwischen beiden Rohren vermieden, welcher bei reinen Schiebeführungen auftritt.

Zur Erkennung der Endlagen sind zwei Reed-Kontakte vorgesehen, die außerhalb des Außenrohres angebracht sind. Diese Reed-Kontakte werden berührungslos von einem am Innenrohr angebrachten Dauermagneten betätigt. Da das Innenrohr im Gegensatz zum Außenrohr nicht bewegt ist, ist mit dieser Anordnung stets ein exaktes Schalten der Reed-Kontakt in der Endposition gewährleistet, so daß eine mit den Reed-Kontakten verbundene Steuerung den Teleskopaussteller zuverlässig bewegen kann.

In Weiterbildung der Anordnung der Reed-Kontakte sind diese zusammen mit einem Stecker auf einer Platine aufgelötet, die gleichzeitig die elektrische Verbindung zwischen dem Stecker und den Reed-Kontakten herstellt. Die Platine ist in einem Hohlraum des Halteteiles gehalten, so daß sie vor Korrosion geschützt ist. Durch die Anordnung der Reed-Kontakte auf der Platine sind die Reed-Kontakte gleichzeitig positioniert und elektrisch mit dem Stecker verbunden, so daß gesonderte Einstellarbeiten entfallen können.

Ein Ausführungsbeispiel der Erfindung ist in der Zeichnung dargestellt und wird im folgenden näher erläutert.

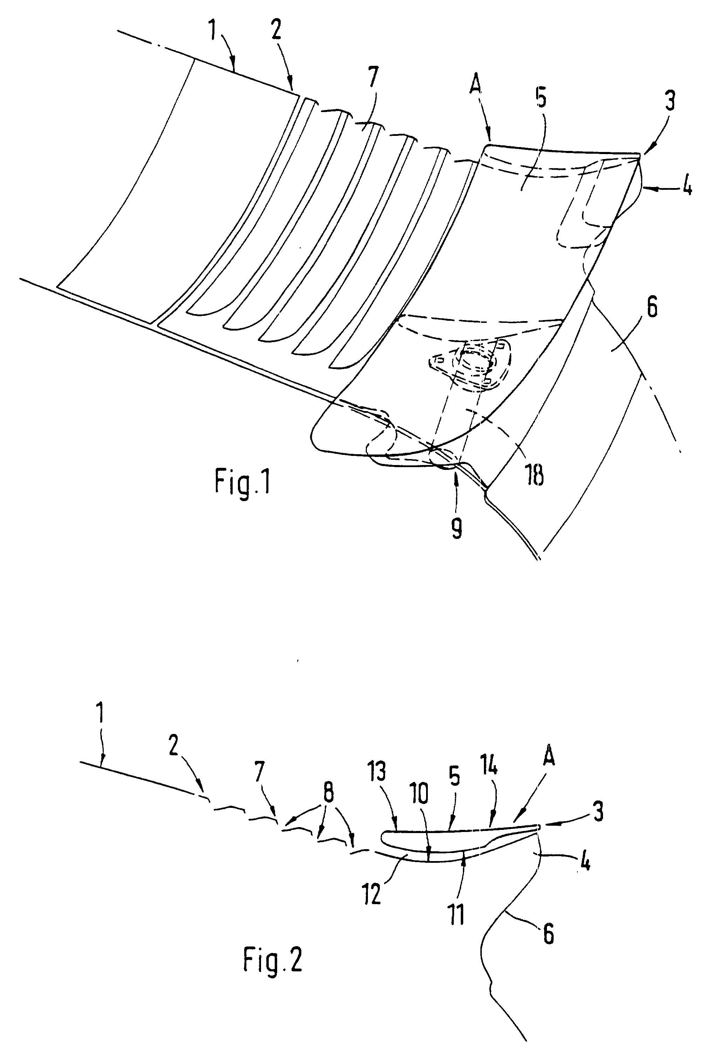

Es zeigen
- Fig. 1: eine perspektivische Teilansicht von schräg hinten auf den Heckbereich eines Personenwagens mit einer Luftleitvorrichtung, wobei nur eine Hälfte des Heckbereichs und der Luftleitvorrichtung dargestellt ist und der Heckflügel seine eingefahrene Ruhestellung einnimmt,
- Fig. 2: einen Mittelschnitt des in Fig. 1 dargestellten Heckbereiches und der Luftleitvorrichtung,

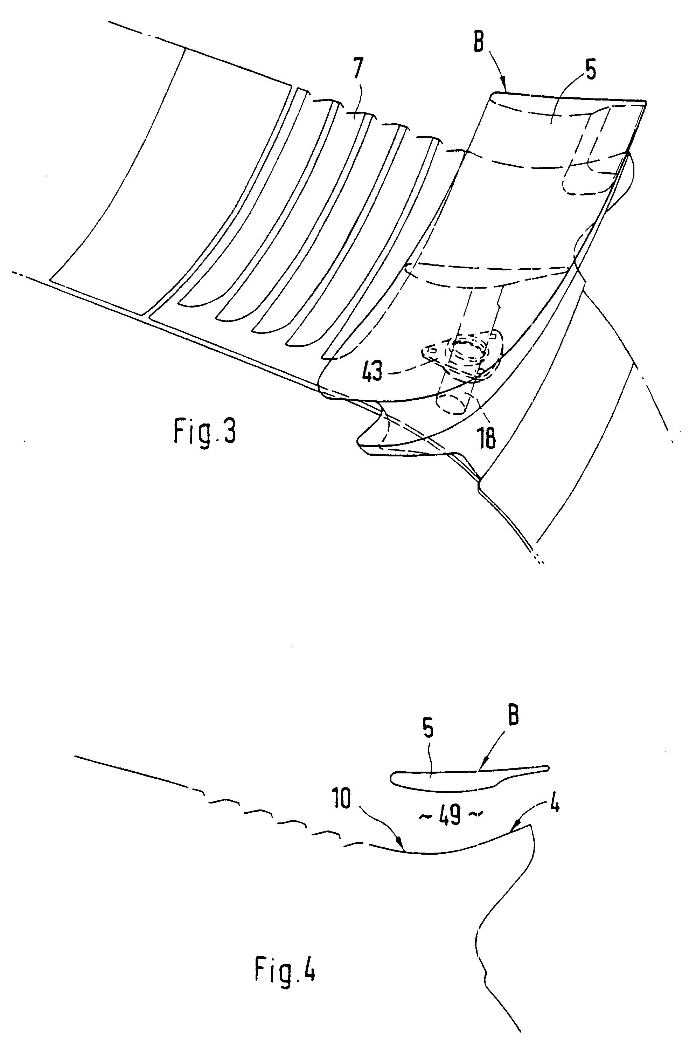

- Fig. 3: eine perspektivische Ansicht entsprechend Fig. 1, jedoch mit ausgefahrenem Heckflügel,
- Fig. 4: einen Mittelschnitt der in Fig. 3 dargestellten Luftleitvorrichtung,
- Fig. 5: eine perspektivische Ansicht von schräg hinten auf die Luftleitvorrichtung und die Antriebseinrichtung für den Heckflügel,
- Fig. 6: einen Schnitt durch die Ausstellvorrichtung für den Heckflügel bei eingefahrenem Heckflügel,
- Fig. 7: einen Schnitt durch die Ausstellvorrichtung für den Heckflügel bei ausgefahrenem Heckflügel,
- Fig. 8: einen Schnitt ähnlich Fig. 6 mit einer zweiten Ausführungsform der Teleskopaussteller bei eingefahrenem Heckflügel,
- Fig. 9: einen Schnitt ähnlich Fig. 7 mit einer zweiten Ausführungsform der Teleskopaussteller bei ausgefahrenem Heckflügel und
- Fig. 10: einen Schnitt ähnlich Fig. 8, wobei der Teleskopaussteller mit einem zusätzlichen äußeren Gehäuse versehen ist.

Ein durch einen Personenkraftwagen gebildetes Kraftfahrzeug 1 weist ein Fließheck 2 mit einer heckseitigen Luftleitvorrichtung 3 auf, die sich aus einem an der Heckoberseite angeordneten feststehenden Heckspoiler 4 und einem mit diesem verbundenen Heckflügel 5 zusammensetzt. Der Heckspoiler 4 ist am hinteren Ende einer heckseitigen Haube 6 angeordnet und im Ausführungsbeispiel einstückig mit dieser ausgebildet. Dem Heckspoiler 4 vorgelagert ist an der Haube 6 ein Kühlluftgitter 7 mit mehreren Lufteintrittsöffnungen 8.

Erfindungsgemäß ist der Heckflügel 5 mittels einer Antriebseinrichtung 9 von einer eingefahrenen Ruhestellung A in eine ausgefahrene Betriebsstellung B verlagerbar und umgekehrt, wobei der Heckflügel 5 in seiner Ruhestellung A in einer an der Oberseite des Heckspoilers 4 vorgesehenen muldenförmigen Aufnahme 10 aufgenommen ist.

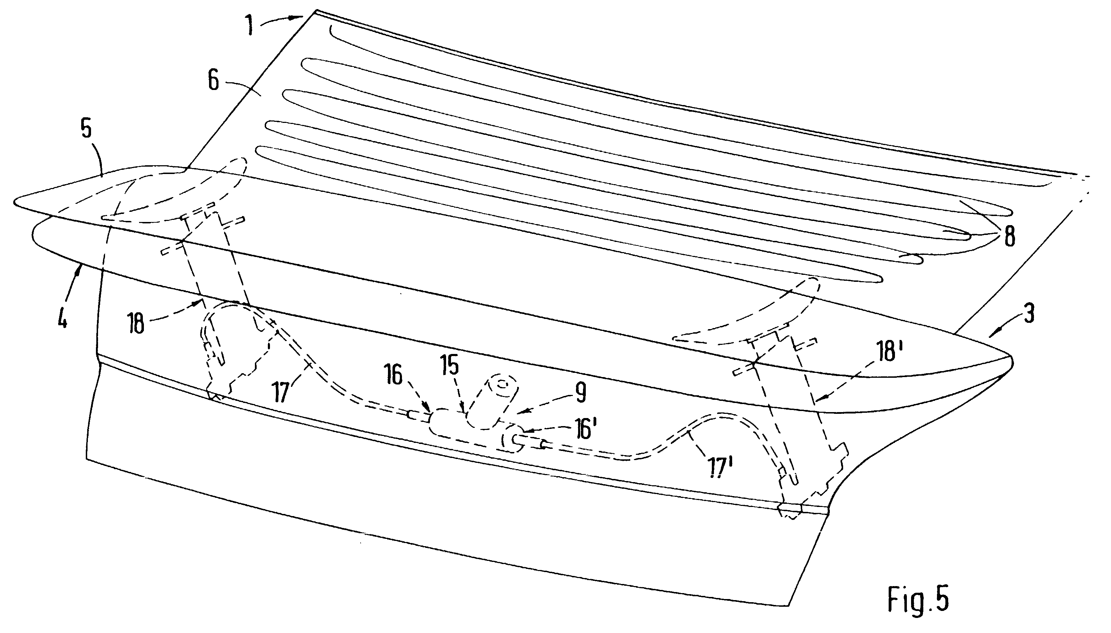

In der eingefahrenen Ruhestellung A verläuft die Unterseite 11 des Heckflügels 5 unter Bildung eines schmalen Spaltes 12 zur darunterliegenden Aufnahme 10 des Heckspoilers 4 und die Oberseite 13 des Heckflügels 5 bildet die Anströmfläche 14 für die Hecküberströmung. Durch den Spalt 12 werden Beschädigungen der lackierten Außenflächen von Heckspoiler 4 und Heckflügel 5 vermieden. Die Antriebseinrichtung 9 umfaßt einen - in Fahrzeugquerrichtung gesehen - etwa mittig angeordneten elektrischen Getriebemotor 15 mit zwei Abgängen 16, 16', wobei von jedem Abgang 16, 16' ein Ende einer flexiblen Antriebswelle 17, 17' weggeführt ist, deren anderes, außenliegendes Ende mit einem den Heckflügel 5 tragenden Teleskopaussteller 18, 18' verbunden ist (Fig. 5).

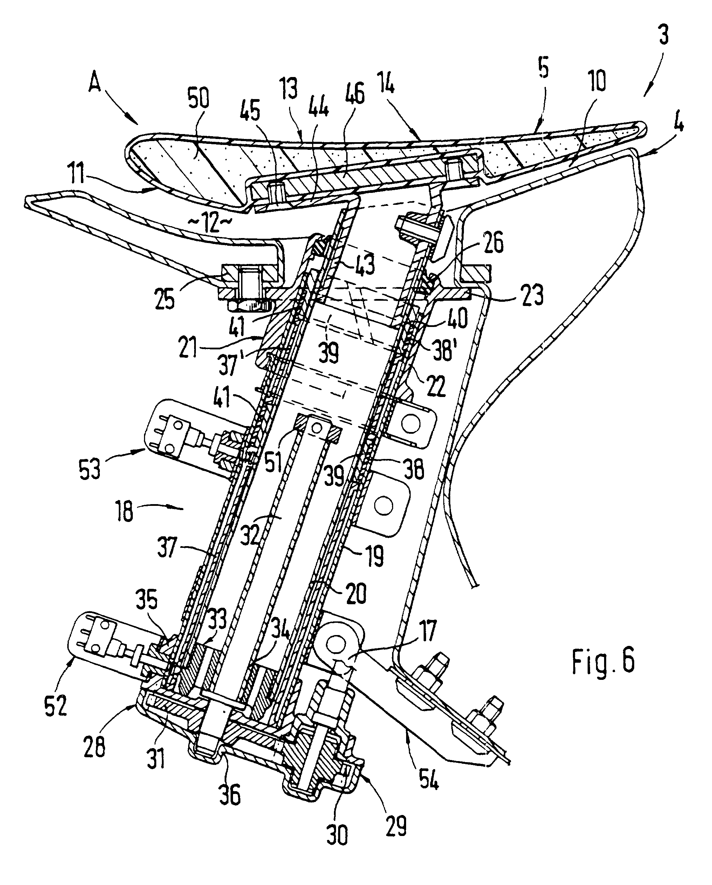

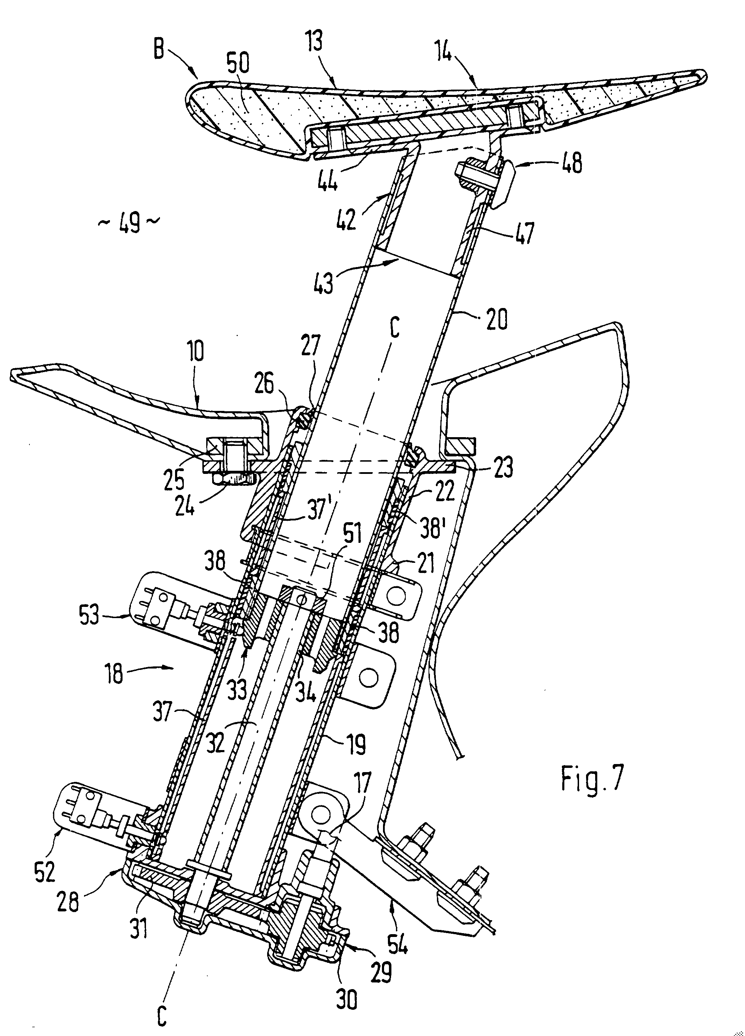

Im Ausführungsbeispiel sind zwei beabstandet angeordnete Teleskopaussteller 18, 18' zur Halterung des Heckflügels 5 vorgesehen. Jeder Teleskopaussteller 18, 18' umfaßt zumindest ein feststehendes Außenrohr 19 und ein in Höhenrichtung verschiebbares Innenrohr 20, wobei das Außenrohr 19 am feststehenden Heckspoiler 4 befestigt und das Innenrohr 20 mit dem Heckflügel 5 verbunden ist. Das Außenrohr 19 ist an seinem oberen Randbereich unter Zwischenschaltung eines oberen Halteteils 21 am Heckspoiler 4 in Lage gehalten. Ein zylindrischer Abschnitt 22 des Halteteils 21 ist außenseitig auf den oberen Randbereich des Außenrohres 19 aufgeschoben und mit diesem durch Klemmung oder dergleichen fest verbunden. Eine mit dem zylindrischen Abschnitt 22 verbundene Halteplatte 23 liegt an einer Auflagefläche des Heckspoilers 4 an. Die Befestigung des Halteteils 21 erfolgt durch mehrere Schrauben 24, die in eingelegte Gewindeplatten 25 des Heckspoilers 4 eingedreht werden. Zwischen dem oberen Halteteil 21 und der Außenseite des Innenrohres 20 ist eine Abstreifring 26 mit einer elastischen Dichtlippe 27 angeordnet (Fig. 6 und 7).

Auf den unteren Rand des Außenrohres 19 ist ein Stirnradgetriebe 28 mit einem mehrteiligen Getriebegehäuse 29 aufgeflanscht, wobei ein mit der flexiblen Antriebswelle 17, 17' fest verbundenes Ritzel 30 mit einem Zahnrad 31 kämmt. Das Zahnrad 31 ist kraftübertragend mit einer aufrechten Spindel 32 verbunden, die mit einer innenseitig am Innenrohr 20 angeordneten Hubmutter 33 zusammenwirkt. Die Hubmutter 33 ist von unten her in das Innenrohr 20 eingesetzt und im Ausführungsbeispiel über eine Schraubverbindung in Lage gehalten. In einen Innengewindeabschnitt 34 der Hubmutter 33 ist die Spindel 32 eingedreht. Das untere Ende der aufrechten Spindel 32 ist sowohl am Gehäuseoberteil 35 als auch am Gehäuseunterteil 36 drehbar gelagert. Zwischen dem Außenrohr 19 und dem Innenrohr 20 sind örtlich Distanzbuchsen 37, 37' und elastische Lager 38, 38' zwischengeschaltet.

Im Ausführungsbeispiel sind zwei beabstandete elastische Lager 38, 38' vorgesehen und zwar im Bereich des oberen Halteteils 21 und in einem mittleren Bereich der Höhenerstreckung des Außenrohrs 19. Jedes elastische Lager 38, 38' umfaßt eine auf das Innenrohr 20 aufgeschobene geschlitzte Lagerbuchse 39, wobei in eine äußere Eindrehung 40 der Lagerbuchse 39 ein Gummiring 41 eingesetzt ist, der mit der Innenseite des Außenrohres 19 gleitend zusammenwirkt. Durch die elastischen Lager 38, 38' werden Toleranzen ausgeglichen und eine Spielfreiheit des Systems erzielt. Das Innenrohr 20 weist eine größere Länge und somit eine größere Höhenerstreckung auf als das Außenrohr 19. In einen vorstehenden, örtlich abgeflachten oberen Endbereich 42 des Innenrohres 20 ist ein Befestigungsteil 43 eingeschoben, wobei ein plattenförmiger Abschnitt 44 des Befestigungsteiles 43 mit dem Heckflügel 5 verbunden ist. Die Befestigung des plattenförmigen Abschnitts 44 erfolgt mittels Schrauben 45, die in eine eingebettete Gewindeplatte 46 des Heckflügels 5 eingedreht sind. Ein in das Innenrohr 20 eingeschobene Abschnitt 47 des Befestigungsteils 43 ist mit dem Innenrohr 20 bei 48 über lösbare Befestigungselemente einstellbar verbunden.

Gemäß der ersten Variante sind die Rohre (Innenrohr, Außenrohr) aus Stahl oder Aluminium hergestellt. Die lineare Ausfahrbewegung des Teleskopausstellers 18, 18' erfolgt entlang einer schrägverlaufenden Ebene C-C. In der ausgefahrenen Betriebsstellung B des Heckflügels 5 erstreckt sich zwischen der Unterseite 11 des Heckflügels 5 und der muldenförmigen Aufnahme 10 ein Strömungskanal 49, durch den eine wesentliche Erhöhung des Abtriebs an der Hinterachse für das Kraftfahrzeug erzielt wird. Der Heckflügel 5 wird geschwindigkeitsabhängig ein- bzw. ausgefahren. Das Ausfahren des Heckflügels 5 ist erst ab einer Geschwindigkeit zwischen 80 und 130 km/h notwendig. Unterhalb dieser Geschwindigkeit sorgt allein der feststehende Heckspoiler 4 für den erforderlichen Abtrieb. Je nach benötigtem Ausfahrhub und vorhandenem Bauraum kann der Teleskopaussteller 18, 18' mehrere Rohre als nur Außenrohr/Innenrohr umfassen. Ferner besteht die Möglichkeit, anstelle der Stahl/Alu-Ausbildung auch Kunststoffrohre für den Teleskopaussteller 18, 18' zu verwenden. Bei einer derartigen Konstruktion könnte auf die elastischen Lager 38, 38' und die Distanzbuchsen 37, 37' verzichtet werden und das Halteteil 21 könnte einstückig mit dem Außenrohr 19 ausgebildet werden. Ferner könnte das Gehäuseoberteil 35 des Stirnradgetriebes 28 einstückig mit dem Außenrohr 19 ausgebildet werden.

Der Heckflügel 5 wird durch ein Kunststoffteil gebildet, das innenseitig mit PU-Schaum 50 versehen ist.

Zum Ausfahren des Heckflügels 5 wird der Getriebemotor 15 in Gang gesetzt und durch Drehbewegung der flexiblen Antriebswellen 17, 17' wird das Ritzel 30 in eine Drehbewegung versetzt und treibt das Zahnrad 31 an. Durch die Drehbewegung des Zahnrades 31 wird auch die Spindel 32 mitbewegt. Durch die feststehende Hubmutter 33 erfolgt die Ausfahrbewegung des den Heckflügel 5 tragenden Innenrohres 20.

Um eine definierte Ausfahrhöhe zu gewährleisten und ein Auffahren der Hubmutter 33 auf den Anschlag 51 zu verhindern (Verspannung) sind am Teleskopaussteller 18, 18' Microschalter 52, 53 mit Endlagenerkennung vorgesehen. Der untere Microschalter 52 definiert den unteren Endpunkt und der obere Microschalter 53 den oberen Endpunkt der Höhenverstellung des Teleskopausstellers 18, 18'. Fährt die Hubmutter 33 über den Schaltpunkt des jeweiligen Microschalters 52, 53, wird der Antriebsmotor 15 abgeschaltet. Nachlauf und Massenträgheit lassen die Hubmutter 33 weiterlaufen bis kurz vor den Anschlag. Den Fig. 6 und 7 ist zu entnehmen, daß zur Befestigung der Teleskopaussteller 18, 18' neben dem oberen Halteteil 21 noch ein unterer Halter 54 vorgesehen sein kann, der gelenkig mit dem Außenrohr 19 verbunden ist und über Schrauben am Heckspoiler 4 in Lage gehalten ist.

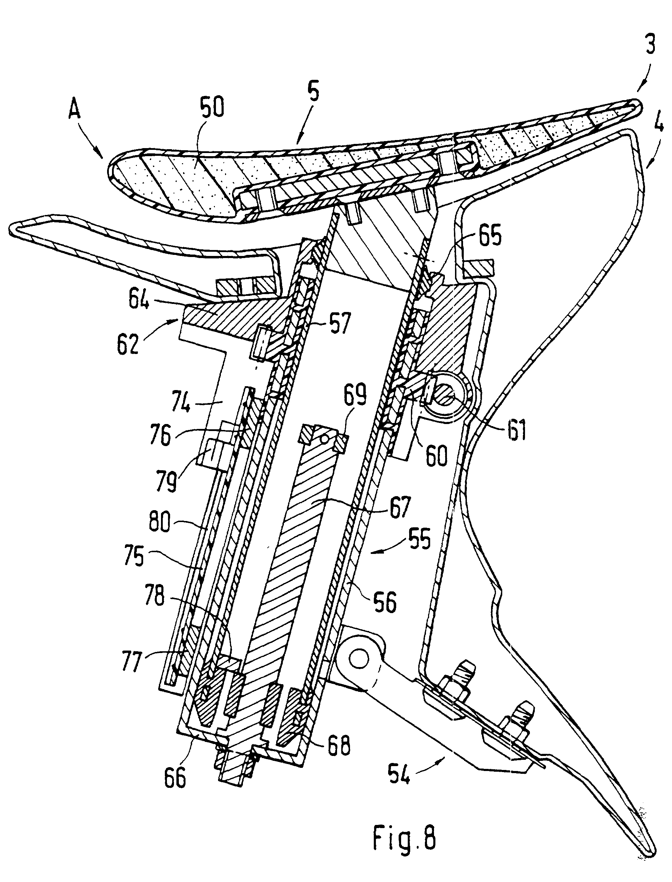

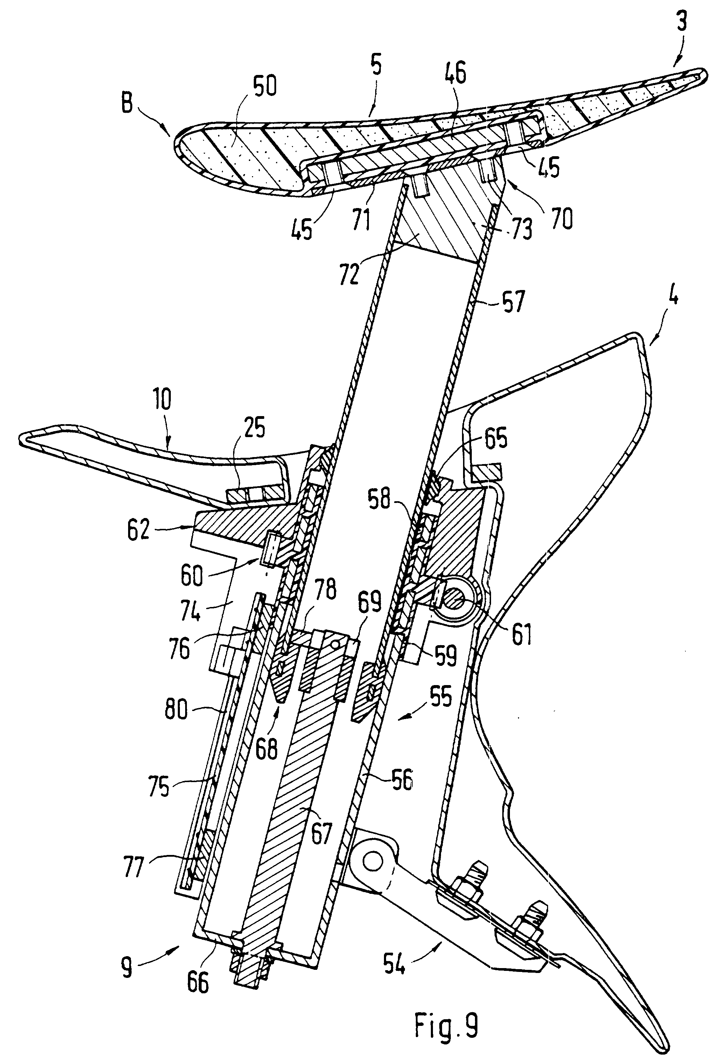

Die in den Fig. 8 und 9 dargestellte Luftleitvorrichtung 3 entspricht im Aufbau exakt der eingangs beschriebenen ersten Ausführungsform und setzt sich aus einem feststehenden Heckspoiler 4 und einem ausfahrbaren Heckflügel 5 zusammen.

Auch diese Luftleitvorrichtung ist mittels einer Antriebseinrichtung 9 von einer eingefahrenen Ruhestellung A in eine ausgefahrene Betriebsstellung B bewegbar und umgekehrt. Die Antriebseinrichtung 9 umfaßt ebenfalls einen - wie in Fig. 5 dargestellt - in Fahrzeugquerrichtung gesehen etwa mittig angeordneten elektrischen Getriebemotor 15 mit zwei Abgängen 16, 16', wobei von jedem Abgang 16, 16' ein Ende einer flexiblen Antriebswelle 17, 17' weggeführt ist, deren anderes außenliegendes Ende mit einem den Heckflügel 5 tragenden Teleskopaussteller 55, 55' verbunden ist. In den Fig. 8 und 9 ist jeweils nur der Teleskopaussteller 55 dargestellt. Jeder Teleskopaussteller 55, 55' umfaßt ein drehbar gelagertes Außenrohr 56 und ein in Höhenrichtung verschiebbares Innenrohr 57. Das Außenrohr 56 weist in einem oberen Randbereich eine innere Führungshülse 58 und eine äußere Führungshülse 59 auf. Beide vorzugsweise aus geeignetem Kunststoff hergestellten Führungshülsen 58, 59 werden durch Anspritzen auf das Außenrohr 56 gebildet und sind örtlich durch radiale Öffnungen des Außenrohres 56 stoffschlüssig fest miteinander verbunden.

Einstückig mit der äußeren Führungshülse 59 verbunden ist ein Schneckenrad 60, das mit einer Schneckenwelle 61 eines oberen Halteteils 62 in Wirkverbindung steht. Die Schneckenwelle 61 ist mit dem freien Ende 63 der flexiblen Antriebswelle 17, 17' kraftübertragend verbunden. Gemäß den Fig. 8 und 9 ist die Schneckenwelle 61 im zweiteilig ausgebildeten oberen Halteteil 62 für das Außenrohr 56 drehbar gelagert. Das obere Halteteil 62 ist mittels nicht näher dargestellter Schrauben an einer darüberliegenden eingelegten Gewindeplatte 25 des Heckspoilers 4 befestigt.

Am oberen Rand eines Oberteiles 64 des Halteteiles 62 ist in einer Nut ein Abstreifring 65 in Lage gehalten, der mit der Außenseite des Innenrohres 57 in Wirkverbindung steht. Das rotierende Außenrohr 56 ist in einem unteren Bereich seiner Höhenerstreckung mittels eines Halters 54 zusätzlich am feststehenden Heckspoiler 4 drehbar gelagert.

An einem Bodenabschnitt 66 des Außenrohres 56 ist eine sich in aufrechter Richtung innerhalb des Außenrohres 56 erstreckende Spindel 67 befestigt, wobei die Spindel 67 fest mit dem Bodenabschnitt 66 verbunden ist. Die Spindel 67 wirkt mit einer Hubmutter 68 zusammen, welche mit dem unteren Randbereich des Innenrohres 57 fest verbunden ist. Der Bodenabschnitt 66 kann einteilig mit dem Außenrohr 56 ausgebildet sein oder aber durch ein separates Teil gebildet werden, das mit dem Außenrohr 56 fest verbunden ist.

Die aus Kunststoff gefertigte Hubmutter 68 ist an das Innenrohr 57 angespritzt. Die Außenseite der Hubmutter 68 wirkt mit der Innenseite des Außenrohres 56 gleitend zusammen. Am oberen Ende der Spindel 67 ist ein Anschlag 69 vorgesehen.

Das Innenrohr 57 ist an seinem oberen Ende über ein ein- oder mehrteiliges Befestigungsteil 70 mit dem Heckflügel 5 verbunden. Gemäß den Fig. 8 und 9 ist ein plattenförmiges Oberteil 71 des Befestigungsteiles 70 mittels Schrauben 45 an einer Gewindeplatte 46 des Heckflügels 5 festgelegt. Eine abschnittsweise der Form des Innenrohres 57 angepaßtes Unterteil 72 ist in den Innenraum des Innenrohres 57 eingeschoben und wird mit diesem verschraubt. Das plattenförmige Oberteil 71 ist mit dem Unterteil durch Befestigungsschrauben 73 verbunden.

Zur Erkennung der beiden Endlagen jedes Teleskopausstellers 55 ist an einem Unterteil 74 des oberen Halteteils 62 eine Platine 75 mit zwei beabstandet angeordneten Reed-Kontakten 76, 77 angeordnet, wobei die Reed-Kontakte von einem auf der Hubmutter 68 sitzenden Dauermagneten 78 betätigt werden. Hierbei wirkt das vom Dauermagneten 78 erzeugte Magnetfeld durch das rotierende Außenrohr 56 hindurch auf die Reed-Kontakte ein. Da die Hubmutter 68 im Gegensatz zum Außenrohr 56 nicht rotiert, bewegt sich der Dauermagnet 78 linear, wenn der Heckflügel 5 von der eingefahrenen Ruhestellung A in die ausgefahrene Betriebsstellung B bewegt wird, so daß mit Hilfe des ersten Reed-Kontaktes 76 die Betriebsstellung B und mit Hilfe des zweiten Reed-Kontaktes 77 die Ruhestellung A detektierbar ist. Zum Schutz gegen Korrosion ist die Platine 75 in einem Hohlraum 80 des Unterteiles 74 aufgenommen. Außen am Unterteil 74 ist ferner ein Steckkontakt 79 angeordnet, der mit der Platine 75 elektrisch verbunden ist. Auf der Platine 75 vorgesehene Leiterpfade (nicht dargestellt) verbinden den Stecker 79 mit den Reed-Kontakten 76 und 77. Der Steckkontakt 79, ist wie auch beide Reed-Kontakte 76 und 77, mit auf die Platine 75 gelötet.

In der in Fig. 8 dargestellten Ruhestellung A kommt der Dauermagnet 78 gegenüber dem zweiten Reed-Kontakt 77 zu liegen, so daß dieser schaltet. In Fig. 9 ist erkennbar, daß in der Betriebsstellung B der Dauermagnet 78 gegenüber dem ersten Reed-Kontakt 76 zu liegen kommt und diesen schaltet.

Mit Hilfe der von den Reed-Kontakten 76, 77 gelieferten Signale betätigt eine nicht dargestellte Steuervorrichtung einen als Antriebsvorrichtung vorgesehenen Elektromotor, der mit der Schneckenwelle 61 verbunden ist.

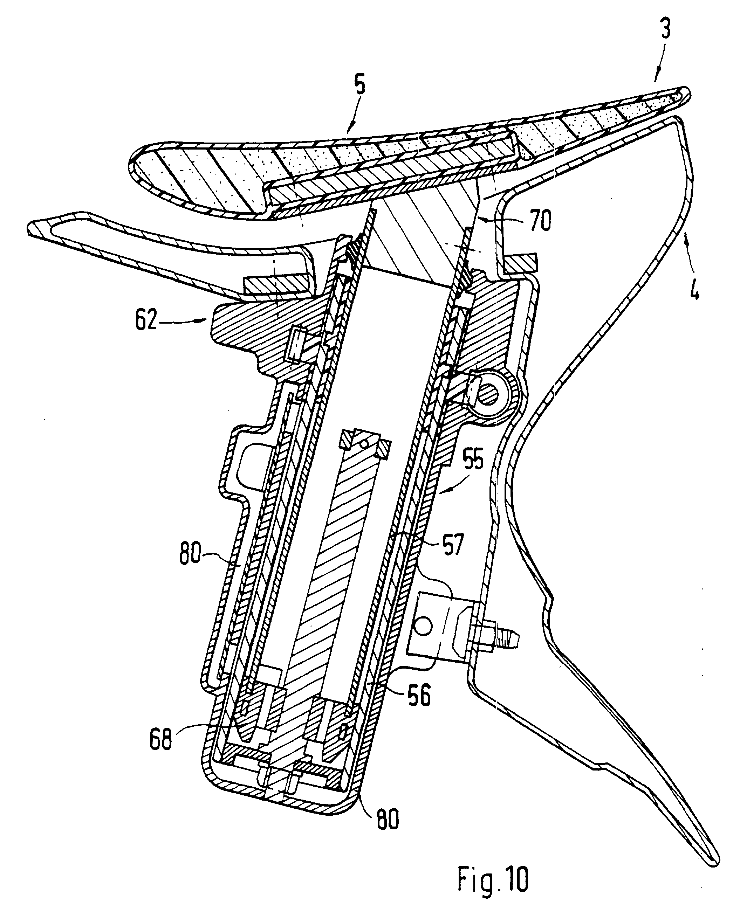

Die in Fig. 10 dargestellte dritte Ausführungsform mit geschlossenem Unterteil 74 ist in gleicher Weise aufgebaut. Der in Fig. 10 dargestellte Teleskopaussteller 55, 55' für die Luftleitvorrichtung 3 unterscheidet sich von Fig. 8 und 9 dadurch, daß das rotierende Außenrohr 56 nach außen hin durch ein zusätzliches rohrförmiges Gehäuse 80 abgeschottet ist.

## Patentansprüche

1. Kraftfahrzeug mit einer heckseitigen Luftleitvorrichtung, die sich aus einer heckseitigen Haube (6) und einem Heckflügel (5) zusammensetzt, wobei der Heckflügel (5) mittels einer Antriebseinrichtung (9) durch eine lineare Bewegung in Höhenrichtung von einer eingefahrenen Ruhestellung (A) in eine ausgefahrene Betriebsstellung (B) bewegbar ist und umgekehrt, und wobei der Heckflügel (5) in der Ruhestellung (A) weitgehend versenkt in einer muldenförmigen Aufnahme (10) aufgenommen ist,
**dadurch gekennzeichnet, dass**
- an der Haube (6) ein feststehender Heckspoiler (4) vorgesehen ist,
- die muldenförmigen Aufnahme (10) an der Oberseite des Heckspoilers (4) vorgesehen ist,
- wobei in der Ruhestellung (A) des Heckflügels (5) die Oberseite (13) des Heckflügels (5) die Anströmfläche (14) für die Hecküberströmung bildet,
- eine Unterseite (11) des Heckflügels (5) unter Bildung eines schmalen Spaltes (12) zur darunterliegenden muldenförmigen Aufnahme (10) des Heckspoilers (4) verläuft,
wobei in der Betriebsstellung (B) des Heckflügels (5) zwischen dem Heckspoiler (4) und dem darüberliegend angeordneten Heckflügel (5) ein Strömungskanal (49) gebildet ist.

2. Kraftfahrzeug nach Anspruch 1, **dadurch gekennzeichnet, dass** die Antriebseinrichtung (9) einen zentralen Getriebemotor (15) umfasst, der über flexible Antriebswellen (17, 17') mit zwei den Heckflügel (5) tragenden Teleskopausstellern (18, 18', 55, 55') verbunden ist.

3. Kraftfahrzeug nach Anspruch 2, **dadurch gekennzeichnet, dass** jeder Teleskopaussteller (18, 18') zumindest ein feststehendes Außenrohr (19) und ein in Höhenrichtung verschiebbares Innenrohr (20) umfasst, wobei das Außenrohr (19) mit dem feststehenden Heckspoiler (4) und das Innenrohr (20) mit dem Heckflügel (5) verbunden ist.

4. Kraftfahrzeug nach den Ansprüchen 2 und 3, **dadurch gekennzeichnet, dass** das Außenrohr (19) an seinem oberen Randbereich unter Zwischenschaltung eines oberen Halteteils (21) am Heckspoiler (4) in Lage gehalten ist.

5. Kraftfahrzeug nach einem oder mehreren der vorangegangenen Ansprüche, **dadurch gekennzeichnet, dass** auf den unteren Rand des Außenrohrs (19) ein Stirnradgetriebe (28) aufgeflanscht ist, wobei ein mit der flexiblen Antriebswelle (17, 17') in Wirkverbindung stehendes Ritzel (30) mit einem Zahnrad (31) kämmt, das starr mit einer aufrechten Spindel (32) verbunden ist, die mit einer am Innenrohr (20) befestigten Hubmutter (33) zusammenwirkt.

6. Kraftfahrzeug nach einem oder mehreren der vorangegangenen Ansprüche, **dadurch gekennzeichnet, dass** zwischen dem Außenrohr (19) und dem Innenrohr (20) örtlich Distanzbuchsen (37, 37') und elastische Lager (38, 38') zwischengeschaltet sind.

7. Kraftfahrzeug nach Anspruch 6, **dadurch gekennzeichnet, dass** jedes elastische Lager (38, 38') eine auf das Innenrohr (20) aufgeschobene geschlitzte Lagerbuchse (39) umfasst, wobei in eine äußere Eindrehung (40) der Lagerbuchse (39) ein Gummiring (41) eingesetzt ist, der mit der Innenseite des Außenrohres (19) gleitend zusammenwirkt.

8. Kraftfahrzeug nach einem oder mehreren der vorangegangenen Ansprüche, **dadurch gekennzeichnet, dass** zwischen dem oberen Halteteil (21) und der Außenseite des Innenrohres (20) ein Abstreifring (26) mit einer elastischen Dichtlippe (27) angeordnet ist.

9. Kraftfahrzeug nach einem oder mehreren der vorangegangenen Ansprüche, **dadurch gekennzeichnet, dass** in das obere Ende des Innenrohres (20) ein Befestigungsteil (43) eingeschoben ist, wobei ein vorstehender plattenartiger Abschnitt (44) des Befestigungsteiles (43) mit dem Heckflügel (5) verbunden ist.

10. Kraftfahrzeug nach Anspruch 2, **dadurch gekennzeichnet, dass** jeder Teleskopaussteller (55, 55') ein mit der Antriebseinrichtung (9) in Wirkverbindung stehendes rotierendes Außenrohr (56) und ein in Höhenrichtung linear verschiebbares Innenrohr (57) umfasst, wobei das Außenrohr (56) am feststehenden Heckspoiler (4) drehbar gelagert und das Innenrohr (57) mit dem Heckflügel verbunden ist.

11. Kraftfahrzeug nach Anspruch 10, **dadurch gekennzeichnet, dass** das Außenrohr (56) zumindest an einem oberen Halteteil (62) drehbar gelagert ist, wobei das Halteteil (62) mit dem feststehenden Heckspoiler (4) fest verbunden ist.

12. Kraftfahrzeug nach Anspruch 11, **dadurch gekennzeichnet, dass** das obere Halteteil (62) aus zwei übereinanderliegend angeordneten Teilen (Oberteil 64, Unterteil 74) zusammengesetzt ist.

13. Kraftfahrzeug nach einem oder mehreren der vorangegangenen Ansprüche, **dadurch gekennzeichnet, dass** das Außenrohr (56) in einem oberen Randbereich eine innere Führungshülse (58) und eine äußere Führungshülse (59) aufweist, wobei ein mit der äußeren Führungshülse (59) verbundenes Schneckenrad (60) mit einer am oberen Halteteil (62) drehbar gelagerten Schneckenwelle (61) in Eingriff steht, die von der Antriebswelle (17, 17') der Antriebsvorrichtung angetrieben wird.

14. Kraftfahrzeug nach einem oder mehreren der vorangegangenen Ansprüche, **dadurch gekennzeichnet, dass** an einem Bodenabschnitt (66) des Außenrohres (56) eine sich in aufrechter Richtung erstreckende fest mit dem Bodenabschnitt (66) verbundene Spindel (67) vorgesehen ist, die mit einer mit dem unteren Randbereich des Innenrohres (57) fest verbundene Hubmutter (68) zusammenwirkt.

15. Kraftfahrzeug nach einem oder mehreren der vorangegangenen Ansprüche, **dadurch gekennzeichnet, dass** das Innenrohr (57) an seinem oberen Ende über ein ein- oder mehrteiliges Befestigungsteil (70) mit dem Heckflügel (5) verbunden ist.

16. Kraftfahrzeug nach einem oder mehreren der vorangegangenen Ansprüche, **dadurch gekennzeichnet, dass** am Innenrohr (57) ein Dauermagnet (78) angeordnet ist, der außerhalb des Außenrohres (56) angebrachte Reed-Kontakte (76, 77) betätigt.

17. Kraftfahrzeug nach Anspruch 16, **dadurch gekennzeichnet, dass** die Reed-Kontakte (76, 77) am Halteteil (62) gehalten sind, wobei die Reed-Kontakte (76, 77) zusammen mit einem Stecker (75) auf einer Platine aufgelötet sind, die eine elektrische Verbindung zwischen den Reed-Kontakten und dem Stecker herstellt, und wobei die Platine von einem im Halteteil (62) vorgesehenen Hohlraum (80) aufgenommen ist.

## Claims

1. A motor vehicle with an air-guide device at the rear formed by a flap (6) at the rear and a rear vane (5). wherein the rear vane (5) is movable by a linear movement in the vertical direction from a retracted rest position (**A**) into an extended operating position (**B**) by means of a drive device (9) and *vice versa*, and wherein the rear vane (5) is received substantially sunk in a recess-shaped receptacle (10) in the rest position (**A**).
**characterized in that**
- a fixed rear spoiler (4) is provided on the flap (6),
- the recess-shaped receptacle (10) is provided on the top side of the rear spoiler (4),
- wherein the top side (13) of the rear vane (5) forms the incident-flow face (14) for the flow over the rear in the rest position (**A**) of the rear vane (5),
- an underside (11) of the rear vane (5) extends so as to form a narrow gap (12) with respect to the recess-shaped receptacle (10) of the rear spoiler (4) situated thereunder, wherein a flow duct (49) is formed between the rear spoiler (4) and the rear vane (5) situated thereabove in the operating position **(B)** of the rear vane (5).

2. A motor vehicle according to Claim 1, **characterized in that** the drive device (9) comprises a central gear motor (15) connected by way of flexible drive shafts (17, 17') to two telescopic extension devices (18, 18', 55, 55') supporting the rear vane (5).

3. A motor vehicle according to Claim 2, **characterized in that** each telescopic extension device (18, 18') comprises at least one fixed outer tube (19) and an inner tube (20) displaceable in the vertical direction, wherein the outer tube (19) is connected to the fixed rear spoiler (4) and the inner tube (20) is connected to the rear vane (5).

4. A motor vehicle according to Claims 2 and 3, **characterized in that** the outer tube (19) is held in position at the upper edge region thereof on the rear spoiler (4) with the interposition of an upper retaining part (21).

5. A motor vehicle according to one or more of the preceding Claims, **characterized in that** a spur-wheel gearing (28) is flange-mounted on the lower edge of the outer tube (19), wherein a pinion (30) operatively connected to the flexible drive shaft (17, 17') meshes with a gearwheel (31) rigidly connected to a vertical spindle (32) cooperating with a lifting nut (33) secured to the inner tube (20).

6. A motor vehicle according to one or more of the preceding Claims, **characterized in that** spacer sleeves (37, 37') and resilient bearings (38, 38') are interposed locally between the outer tube (19) and the inner tube (20).

7. A motor vehicle according to Claim 6, **characterized in that** each resilient bearing (38. 38') comprises a slotted bearing bush (39) pressed onto the inner tube (20), wherein a rubber ring (41) cooperating in a sliding manner with the inside of the outer tube (19) is inserted into an outer turned recess (40) in the bearing bush (39).

8. A motor vehicle according to one or more of the preceding Claims, **characterized in that** a scraper ring (26) with a resilient sealing lip (27) is arranged between the upper retaining part (21) and the outside of the inner tube (20).

9. A motor vehicle according to one or more of the preceding Claims, **characterized in that** a fastening part (43) is inserted into the upper end of the inner tube (20), wherein a projecting plate-like portion (44) of the fastening part (43) is connected to the rear vane (5).

10. A motor vehicle according to Claim 2, **characterized in that** each telescopic extension device (55, 55') comprises a rotating outer tube (56) operatively connected to the drive device (9) and an inner tube (57) displaceable in a linear manner in the vertical direction, wherein the outer tube (56) is rotatably mounted on the fixed rear spoiler (4) and the inner tube (57) is connected to the rear vane.

11. A motor vehicle according to Claim 10, **characterized in that** the outer tube (56) is rotatably mounted at least on one upper retaining part (62), wherein the retaining part (62) is firmly connected to the fixed rear spoiler (4).

12. A motor vehicle according to Claim 11, **characterized in that** the upper retaining part (62) is formed by two parts (an upper part 64 and a lower part 74) arranged one above the other.

13. A motor vehicle according to one or more of the preceding Claims, **characterized in that** the outer tube (56) comprises an inner guide sleeve (58) and an outer guide sleeve (59) in an upper edge region, wherein a worm gear (60) connected to the outer guide sleeve (59) engages with a worm shaft (61) mounted rotatably on the upper retaining part (62) and driven by the drive shaft (17, 17') of the drive device.

14. A motor vehicle according to one or more of the preceding Claims, **characterized in that** a spindle (67) extending in the vertical direction and firmly connected to a base portion (66) of the outer tube (56) and cooperating with a lifting nut (68) firmly connected to the lower edge region of the inner tube (57) is provided on the base portion (66).

15. A motor vehicle according to one or more of the preceding Claims, **characterized in that** the inner tube (57) is connected at the upper end thereof to the rear vane (5) by way of a one-piece or multiple-piece fastening part (70).

16. A motor vehicle according to one or more of the preceding Claims, **characterized in that** a permanent magnet (78) actuating reed contacts (76, 77) attached outside the outer tube (56) is arranged on the inner tube (57).

17. A motor vehicle according to Claim 16, **characterized in that** the reed contacts (76, 77) are held on the retaining part (62), wherein the reed contacts (76, 77) are soldered together with a plug (75) onto a plate producing an electrical connexion between the reed contacts and the plug, and wherein the plate is received by a cavity (80) provided in the retaining part (62).

## Revendications

1. Véhicule automobile comportant un dispositif de guidage de l'air à l'arrière, qui se compose d'un capot (6) à l'arrière et d'un aileron arrière (5), l'aileron arrière (5) étant déplaçable au moyen d'un dispositif d'entraînement (9), par un mouvement linéaire dans le sens de la hauteur, d'une position de repos (A) rentrée à une position de fonctionnement (B) extraite et inversement, et en position de repos (A), l'aileron arrière (5) étant logé, largement encastré, dans un logement (10) en forme d'auge,
**caractérisé en ce que**
- sur le capot (6) est prévu un déporteur arrière (4) fixe,
- le logement (10) en forme d'auge est prévu sur le côté supérieur du déporteur arrière (4),
- en position de repos (A) de l'aileron arrière (5), le côté supérieur (13) de l'aileron arrière (5) formant la surface d'attaque (14) pour l'écoulement passant sur l'arrière,
- un côté inférieur (11) de l'aileron arrière (5) s'étend, en formant une fente (12) étroite, vers le logement (10) en forme d'auge situé au-dessous du déporteur arrière (4), tandis qu'un canal d'écoulement (49) est fermé en position de fonctionnement (B) de l'aileron arrière (5), entre le déporteur arrière (4) et l'aileron arrière (5) situé au-dessus.

2. Véhicule automobile selon la revendication 1, **caractérisé en ce que** le dispositif d'entraînement (9) comprend un motoréducteur (15) central qui est relié, par des arbres d'entraînement (17, 17') flexibles, à deux bras télescopiques (18, 18', 55, 55') portant l'aileron arrière (5).

3. Véhicule automobile selon la revendication 2, **caractérisé en ce que** chaque bras télescopique (18, 18') comprend au moins un tube extérieur (19) fixe et un tube intérieur (20) qui peut coulisser dans le sens de la hauteur, le tube extérieur (19) étant relié au déporteur arrière (4) fixe et le tube intérieur (20) étant relié à l'aileron arrière (5).

4. Véhicule automobile selon les revendications 2 et 3, **caractérisé en ce que** le tube extérieur (19) est immobilisé, sur sa zone de bordure supérieure, sur le déporteur arrière (4), par interposition d'un élément de maintien (21) supérieur.

5. Véhicule automobile selon une ou plusieurs des revendications précédentes, **caractérisé en ce que** sur le bord inférieur du tube extérieur (19) est bridé un engrenage droit (28), un pignon (30), en liaison active avec l'arbre d'entraînement (17, 17') flexible, engrenant avec une roue dentée (31) qui est reliée rigidement à une broche (32) verticale, laquelle coopère avec un écrou de levage (33) fixé au tube intérieur (20).

6. Véhicule automobile selon une ou plusieurs des revendications précédentes, **caractérisé en ce qu'**entre le tube extérieur (19) et le tube intérieur (20) sont intercalés par endroits des douilles d'écartement (37, 37') et des paliers élastiques (38, 38').

7. Véhicule automobile selon la revendication 6, **caractérisé en ce que** chaque palier élastique (38, 38') comprend un coussinet (39) fendu, enfilé sur le tube intérieur (20), une bague en caoutchouc (41), qui coopère à glissement avec le côté intérieur du tube extérieur (19), étant insérée dans une partie tournée (40) extérieure du coussinet (39).

8. Véhicule automobile selon une ou plusieurs des revendications précédentes, **caractérisé en ce qu'**une bague racleuse (26) avec une lèvre d'étanchéité (27) élastique est disposée entre l'élément de maintien supérieur (21) et le côté extérieur du tube intérieur (20).

9. Véhicule automobile selon une ou plusieurs des revendications précédentes, **caractérisé en ce que** dans l'extrémité supérieure du tube intérieur (20) est introduit un élément de fixation (43), une partie (44) saillante de type plaque de l'élément de fixation (43) étant reliée à l'aileron arrière (5).

10. Véhicule automobile selon la revendication 2, **caractérisé en ce que** chaque bras télescopique (55, 55') comprend un tube extérieur (56) rotatif, en liaison active avec le dispositif d'entraînement (9) et un tube intérieur (57) qui peut coulisser linéairement dans le sens de la hauteur, le tube extérieur (56) étant monté tournant sur le déporteur (4) fixe, et le tube intérieur (57) étant relié à l'aileron arrière.

11. Véhicule automobile selon la revendication 10, **caractérisé en ce que** le tube extérieur (56) est monté tournant au moins sur un élément de maintien supérieur (62), l'élément de maintien (62) étant relié fixement au déporteur arrière (4) fixe.

12. Véhicule automobile selon la revendication 11, **caractérisé en ce que** l'élément de maintien supérieur (62) est composé de deux parties (partie supérieure 64, partie inférieure 74) superposées.

13. Véhicule automobile selon une ou plusieurs des revendications précédentes, **caractérisé en ce que** le tube extérieur (56) comporte, dans une zone de bordure supérieure, un manchon de guidage intérieur (58) et un manchon de guidage extérieur (59), une roue de vis sans fin (60), reliée au manchon de guidage extérieur (59), étant en prise avec un arbre de vis sans fin (61) qui est monté de manière à pouvoir tourner sur l'élément de maintien supérieur (62) et qui est entraîné par l'arbre d'entraînement (17, 17') du dispositif d'entraînement.

14. Véhicule automobile selon une ou plusieurs des revendications précédentes, **caractérisé en ce qu'**il est prévu, sur une section de fond (66) du tube extérieur (56), une broche (67) qui s'étend dans la direction verticale et qui est reliée fixement à la section de fond (66), et qui coopère avec un écrou de levage (68) relié fixement à la zone de bordure inférieure du tube intérieur (57).

15. Véhicule automobile selon une ou plusieurs des revendications précédentes, **caractérisé en ce que** le tube intérieur (57) est relié, à son extrémité supérieure, à l'aileron arrière (5), par un élément de fixation (70) en une ou plusieurs parties.

16. Véhicule automobile selon une ou plusieurs des revendications précédentes, **caractérisé en ce que** sur le tube intérieur (57) est disposé un aimant permanent (78) qui actionne des contacts Reed (76, 77) placés à l'extérieur du tube extérieur (56).

17. Véhicule automobile selon la revendication 16, **caractérisé en ce que** les contacts Reed (76, 77) sont fixés à l'élément de maintien (62), les contacts Reed (76, 77) étant brasés avec un connecteur (75) sur une platine qui réalise une liaison électrique entre les contacts Reed et le connecteur, et la platine étant reçue par une cavité (80) prévue dans l'élément de maintien (62).
